# EUROPÄISCHE PATENTANMELDUNG

(11) **EP 3 208 170 A1**
(43) Veröffentlichungstag der Anmeldung: **23.08.2017**
(21) Anmeldenummer: 16156369.7
(22) Anmeldetag: 18.02.2016
(51) Int. Cl.: B61D 17/22, B60D 5/00

(54) **MITTELBÜGELSYSTEM FÜR EIN GELENKFAHRZEUG**

(71) Anmelder: ATG Autotechnik GmbH, 22962 Siek (DE)
(72) Erfinder: Browne, Denis, 22946 Trittau (DE)
(74) Vertreter: Glawe, Delfs, Moll

(57) **Zusammenfassung**

Die Erfindung betrifft ein Mittelbügelsystem für ein zwischen einem Vorderwagen (10) und einem Hinterwagen (11) eines Fahrzeug angeordnetes Fahrzeuggelenk, das einen Durchgang (33) zwischen dem Vorderwagen (10) und dem Hinterwagen (11) bildet. Der Mittelbügel (15) umschließt den Durchgang (33). Das Mittelbügelsystem umfasst ein Kabel (16), das sich zwischen dem Vorderwagen (10) und dem Hinterwagen (11) erstreckt, wobei das Kabel (16) oberhalb des Durchgangs (33) angeordnet ist. Erfindungsgemäß umfasst das Mittelbügelsystem einen Schwenkhebel (20) zwischen dem Mittelbügel (15) und dem Kabel (16). Das erfindungsgemäße Mittelbügelsystem ist kostengünstig und bietet eine zuverlässige Führung für die Kabel (16).

## Beschreibung

Die Erfindung betrifft ein Mittelbügelsystem für ein Gelenkfahrzeug. Das Gelenkfahrzeug umfasst einen Vorderwagen und einen Hinterwagen, die durch ein Fahrzeuggelenk miteinander verbunden sind. Es besteht ein Durchgang zwischen dem Vorderwagen und dem Hinterwagen, der von dem Mittelbügel umschlossen ist. Das Mittelbügelsystem umfasst ein Kabel zwischen dem Vorderwagen und dem Hinterwagen. Das Kabel ist oberhalb des Durchgangs angeordnet.

Solche Mittelbügelsysteme kommen beispielsweise in Gelenkbussen zum Einsatz, in denen während der Fahrt ein Übergang der Passagiere zwischen dem Vorderwagen und dem Hinterwagen möglich ist. Um die Passagiere vor Umgebungseinflüssen zu schützen, ist zwischen dem Vorderwagen und dem Hinterwagen normalerweise ein Faltenbalg vorgesehen, der das Fahrzeuggelenk umgibt.

In diesen Gelenkfahrzeugen gibt es technische Funktionen, die sowohl den Vorderwagen als auch den Hinterwagen betreffen. Betätigt beispielsweise der im Vorderwagen sitzende Fahrer den Lichtschalter, so soll dies dazu führen, dass ein Rücklicht des Hinterwagens leuchtet. Um dies zu ermöglichen, erstreckt sich ein elektrisches Kabel vom Vorderwagen über den Zwischenraum hinweg bis zum Hinterwagen. Weitere Funktionen erfordern Hydraulikleitungen, Luftschläuche und sonstige Versorgungsleitungen zwischen dem Vorderwagen und dem Hinterwagen.

In Niederflurfahrzeugen, bei denen der für die Passagiere bestimmte Boden möglichst tief angeordnet ist, bleibt unterhalb des Durchgangs, der den Vorderwagen und den Hinterwagen verbindet, nur wenig Platz. Mehr Platz steht oberhalb des Durchgangs zur Verfügung, weswegen die Kabel häufig dort geführt sind.

Um zu verhindern, dass die Kabel beim Überfahren von Bodenwellen oder bei Unebenheiten an dem Mittelbügel anstoßen, ist eine Führung der Kabel relativ zu dem Mittelbügel erforderlich. Die bekannten Systeme (EP 0 897 337 A1, EP 2 384 913 A1) sind komplex und aufwändig in der Herstellung.

Der Erfindung liegt die Aufgabe zugrunde, ein kostengünstiges Mittelbügelsystem vorzustellen, bei dem das Kabel so geführt ist, dass es nicht am Mittelbügel anstoßen kann. Ausgehend vom genannten Stand der Technik wird die Aufgabe gelöst mit den Merkmalen des Anspruchs 1. Vorteilhafte Ausführungsformen sind in den Unteransprüchen angegeben.

Erfindungsgemäß ist das Mittelbügelsystem so gestaltet, dass ein Schwenkhebel sich zwischen dem Mittelbügel und dem Kabel erstreckt.

Zunächst werden einige Begriffe erläutert. Kabel im Sinne der vorliegenden Erfindung dienen dazu, technische Funktionen des Vorderwagens und des Hinterwagens miteinander zu verknüpfen. Der Begriff Kabel umfasst alle Versorgungsleitungen, über die Signale oder Kräfte zwischen dem Vorderwagen und dem Hinterwagen übertragen werden. Vom Begriff Kabel umfasst sind insbesondere elektrische Kabel, Glasfaserleitungen, Hydraulikleitungen, Luftschläuche für Klimaanlage und Heizung. Meistens erstreckt sich eine Mehrzahl solcher Kabel zwischen dem Vorderwagen und dem Hinterwagen. Die erfindungsgemäße Lagerung kann alle oder einen Teil dieser Kabel erfassen. Die Längsrichtung des Fahrzeugs schließt mit dem Mittelbügel einen rechten Winkel ein.

Die Bewegungen, die im Betrieb des Gelenkfahrzeugs zwischen dem Vorderwagen und dem Hinterwagen stattfinden, sind komplex. Sie umfassen Drehen, Nicken, Wanken sowie Kombinationen daraus. Die Bewegungen, die die Kabel und der Mittelbügel dabei im Zwischenraum zwischen dem Vorderwagen und dem Hinterwagen vollführen, sind nicht immer synchron. Durch den erfindungsgemäßen Schwenkhebel wird einerseits die erforderliche Bewegungsfreiheit zwischen dem Kabel und dem Mittelbügel ermöglicht, während andererseits solche Bewegungen unterbunden werden, die unerwünscht sind. Unerwünscht sind vor allem solche Bewegungen der Kabel, durch die die Kabel am Mittelbügel anschlagen.

Der erfindungsgemäße Schwenkhebel ist vorzugsweise so gestaltet, dass er eine definierte Vertikalführung für die Kabel bietet. Definierte Vertikalführung bedeutet, dass weder eine von oben nach unten gerichtete Kraft noch eine von unten nach oben gerichtete Kraft eine Bewegung in vertikaler Richtung bewirken kann. Die definierte Vertikalführung ist vorzugsweise unabhängig von der Winkelposition des Schwenkhebels.

Der Schwenkhebel erstreckt sich vorzugsweise zwischen einer Aufhängung am Mittelbügel und einer Aufhängung an einem Trageelement des Kabels. Die Aufhängung am Mittelbügel und die Aufhängung an dem Trageelement des Kabels haben vorzugsweise in horizontaler Richtung einen Abstand zueinander. Dadurch wird eine Übertragung der vertikalen Kräfte zwischen dem Kabel und dem Mittelbügel möglich.

Zwischen dem Schwenkhebel und dem Mittelbügel kann ein erstes Schwenkgelenk vorgesehen sein, über das der Schwenkhebel relativ zu dem Mittelbügel geschwenkt werden kann. Das erste Schwenkgelenk kann nahe einem ersten Ende des Schwenkhebels angeordnet sein. Die Achse des ersten Schwenkgelenks kann im Wesentlichen vertikal oder vorzugsweise genau vertikal ausgerichtet sein.

Zwischen dem Schwenkhebel und dem Kabel kann ein zweites Schwenkgelenk vorgesehen sein, über das der Schwenkhebel relativ zu dem Trageelement des Kabels geschwenkt werden kann. Das zweite Schwenkgelenk kann nahe einem zweiten Ende des Schwenkhebels angeordnet sein. Die Achse des zweiten Schwenkgelenks kann im Wesentlichen vertikal oder vorzugsweise genau vertikal ausgerichtet sein.

Im Normalzustand, in dem das Gelenkfahrzeug gerade auf einer ebenen Fläche steht, ist der Schwenkhebel vorzugsweise horizontal ausgerichtet. Der Winkel, den der Schwenkhebel mit der Querrichtung einschließt, ist vorzugsweise kleiner als 45°, weiter vorzugsweise kleiner als 30°, weiter vorzugsweise kleiner als 10°. Der Schwenkbereich, für den der Schwenkhebel im Betrieb des Gelenkfahrzeugs ausgerichtet ist, schließt vorzugsweise die Querrichtung ein.

Wenn der Schwenkhebel eine feste Länge hat und über in fester Position angeordnete Schwenkgelenke mit dem Mittelbügel und dem Trageelement des Kabels verbunden ist, so ergibt sich eine Zwangsführung in horizontaler Richtung, die über den Schwenkhebel auf die Kabel ausgeübt wird. Um eine solche Zwangsführung zu vermeiden, kann eine Schiebeführung zwischen dem Schwenkhebel und dem Mittelbügel und/oder zwischen dem Schwenkhebel und dem Kabel vorgesehen sein. Die Schiebeführung kann in Querrichtung ausgerichtet sein oder wenigstens eine Richtungskomponente in Querrichtung umfassen. Bevorzugt ist die Schiebeführung zwischen dem Mittelbügel und dem Schwenkgelenk des Schwenkhebels angeordnet. Zusätzlich oder alternativ zu der Schiebeführung kann der Schwenkhebel eine variable Länge haben, die sich im Betrieb des Gelenkfahrzeugs durch die Bewegungen zwischen dem Vorderwagen und dem Hinterwagen verändert.

Um Bewegungen zwischen dem Vorderwagen und dem Hinterwagen aufnehmen zu können, nimmt das Kabel regelmäßig einen geschwungenen Weg im Zwischenraum zwischen dem Vorderwagen und dem Hinterwagen. Um die Deckenhöhe im Durchgang nicht unnötig einzuschränken, sollte sich der kurvenförmige Weg im Wesentlichen in einer horizontalen Ebene erstrecken. In einer vorteilhaften Ausführungsform ist eine Kabelführung vorgesehen, an der sich der Weg des Kabels im Zwischenraum zwischen dem Vorderwagen und dem Hinterwagen orientieren kann. Die Kabelführung hat vorzugsweise eine feste Länge. Die Kabelführung kann beispielsweise eine Blattfeder umfassen, die am Vorderwagen und am Hinterwagen befestigt ist und die im Zwischenraum im Wesentlichen den gleichen Weg wie das Kabel nimmt. Als Blattfeder wird ein lang gestrecktes Element bezeichnet, das sich quer zu seiner Längsrichtung in einer Richtung leicht elastisch verformen lässt und in einer anderen Richtung schwerer elastisch verformen lässt. Möglich ist es auch, dass die Kabelführung starre Lenkstangen umfasst, die in geeigneter Weise an Gelenken aufgehängt sind, so dass sie Bewegungen zwischen dem Vorderwagen und dem Hinterwagen aufnehmen können.

Bei einigen Gelenkfahrzeugen ist der Mittelbügel so geführt, dass er immer eine mittige Stellung zwischen dem Vorderwagen und dem Hinterwagen einnimmt. Mit einem solchen Mittelbügel kann die erfindungsgemäße Lagerung für das Kabel ohne weiteres verwendet werden. Möglich ist auch eine Verwendung mit Mittelbügeln, die im Betrieb des Gelenkfahrzeugs nicht auf eine mittige Position zwischen dem Vorderwagen und dem Hinterwagen festgelegt sind. Beispielsweise kann der Mittelbügel mittels einer Lenkstange in einem festen Abstand zu dem Vorderwagen oder dem Hinterwagen gehalten sein. Die Lenkstange kann an dem Mittelbügel angelenkt sein und eine Drehung des Mittelbügels um eine senkrechte Achse erlauben. Wenn der Mittelbügel durch eine solche Lenkstange in einem festen Abstand zu einem der Wagen gehalten wird, werden Nickbewegungen durch eine Relativbewegung zwischen dem Mittelbügel und dem anderen Wagen ausgeglichen.

Statt eines vollständig starren Lenkers kann auch eine Verbindung vorgesehen sein, die gegenüber Druckkräften starr ist, die sich aber unter Zugkräften verlängern lässt. Wenn das Gelenkfahrzeug über eine Kuppe fährt und sich der Abstand zwischen dem Vorderwagens und dem Hinterwagen im oberen Bereich deswegen vergrößert, kann der Mittelbügel sich von dem Wagen, zu dem die Verbindung besteht, entfernen und dadurch dazu beitragen, den Abstand zu überbrücken. Der Abstand zwischen dem Mittelbügel und dem Vorderwagen oder Hinterwagen, den die Lenkstange im Normalzustand definiert, ist dann zugleich der Mindestabstand. Hingegen kann der Abstand durch Zugkraft vergrößert werden.

Die Erfindung wird nachfolgend unter Bezugnahme auf die beigefügten Zeichnungen anhand vorteilhafter Ausführungsformen beschrieben. Es zeigen:
- Fig. 1:: eine Seitenansicht eines Gelenkfahrzeugs;
- Fig. 2:: eine perspektivische Ansicht eines erfindungsgemäßen Mittelbügelsystems;
- Fig. 3:: eine schematische Ansicht von oben auf ein erfindungsgemäßes Mittelbügelsystem;
- Fig. 4:: die Ansicht aus Fig. 3 bei einer weiteren Ausführungsform der Erfindung;
- Fig. 5:: die Ansicht aus Fig. 3 bei noch einer weiteren Ausführungsform der Erfindung; und
- Fig. 6:: eine Ansicht in Längsrichtung auf einen Teil eines erfindungsgemäßen Mittelbügelsystems.

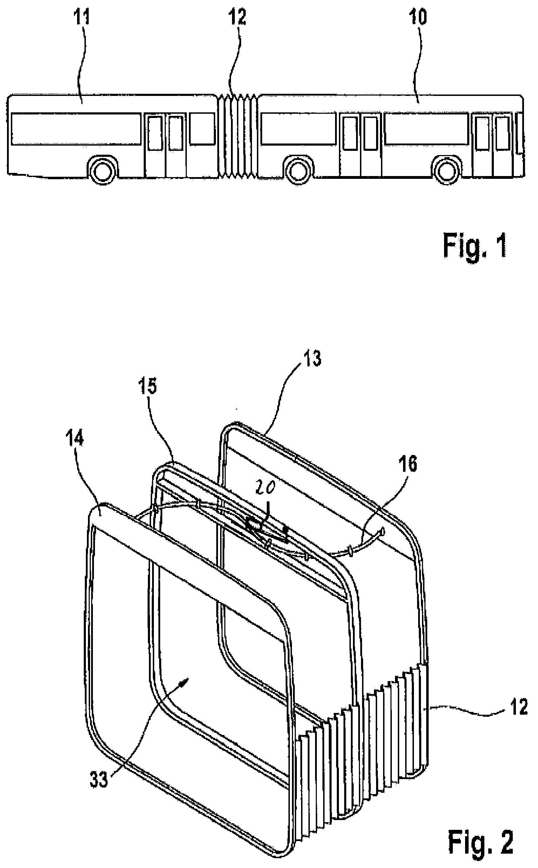

Ein in Fig. 1 gezeigter Gelenkbus umfasst einen Vorderwagen 10 und einen Hinterwagen 11. Der Vorderwagen 10 und der Hinterwagen 11 sind über ein in Fig. 1 nicht dargestelltes Fahrzeuggelenk derart miteinander verbunden, dass Passagiere während der Fahrt durch einen Durchgang 33 hindurch zwischen dem Vorderwagen 10 und dem Hinterwagen 11 wechseln können. Ein Faltenbalg 12 umgibt das Fahrzeuggelenk und den Durchgang 33. Das erfindungsgemäße Mittelbügelsystem ist im Zwischenraum zwischen dem Vorderwagen 10 und dem Hinterwagen 11 angeordnet und in Fig. 1 durch den Faltenbalg 12 verdeckt.

Fig. 2 zeigt den Endrahmen 13 des Vorderwagens 10 und den Endrahmen 14 des Hinterwagens 11. Der Faltenbalg 12 ist in Fig. 2 nur ausschnittsweise gezeigt. Zwischen dem Endrahmen 13 und dem Endrahmen 14 ist ein Mittelbügel 15 angeordnet, der dem Faltenbalg 12 zusätzlichen Halt vermittelt. Ein Kabel 16 erstreckt sich vom Endrahmen 13 zum Endrahmen 14. Das Kabel 16 nimmt im Zwischenraum zwischen dem Vorderwagen 10 und dem Hinterwagen 11 einen geschwungenen Weg, der sich im Wesentlichen in einer horizontalen Ebene erstreckt. Das Kabel 16 ist dadurch in der Lage, Bewegungen auszugleichen, die der Vorderwagen 10 und der Hinterwagen 11 relativ zueinander vollführen.

Am Mittelbügel 15 ist das Kabel 16 über einen Schwenkhebel 20 aufgehängt. Der Schwenkhebel 20 ist sowohl relativ zu dem Mittelbügel 15 als auch relativ zu dem Kabel 16 um eine senkrechte Achse schwenkbar. Damit wird dem Kabel 16 eine Bewegungsfreiheit relativ zu dem Mittelbügel 15 gewährt, durch die Relativbewegungen zwischen dem Vorderwagen 10 und dem Hinterwagen 11 ausgeglichen werden können. Das Kabel 16 und der Mittelbügel 15 können unabhängig voneinander die Position einnehmen, in der sie der geringsten Belastung ausgesetzt sind.

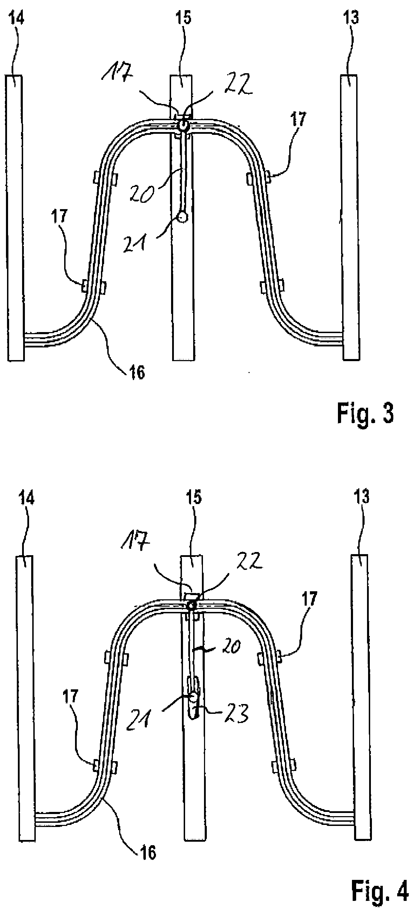

Bei der Ausführungsform der Fig. 3 erstreckt sich eine Mehrzahl von Kabeln 16 zwischen dem Endrahmen 13 und dem Endrahmen 14. Die Kabel 16 werden durch Trageelemente 17 in einer horizontalen Ebene parallel zueinander gehalten, so dass sie sich in Form eines einheitlichen Strangs durch den Zwischenraum zwischen dem Endrahmen 13 und dem Endrahmen 14 erstrecken.

Die Lagerung der Kabel 16 relativ zu dem Mittelbügel 15 erfolgt über den Schwenkhebel 20, der über ein erstes Schwenkgelenk 21 mit dem Mittelbügel 15 verbunden ist und der über ein zweites Schwenkgelenk 22 mit einem der Trageelemente 17 der Kabel 16 verbunden ist. Durch den Schwenkhebel 20 unterliegen die Kabel 16 einer definierten Vertikalführung, so dass die Kabel 16 beim Überfahren von Bodenwellen oder bei Unebenheiten nicht nach oben oder unten schlagen können. In der horizontalen Ebene haben die Kabel 16 relativ zu der Mittelbügel 15 eine weitgehende Bewegungsfreiheit. Lediglich durch die feste Länge des Schwenkhebels 20 ergibt sich eine gewisse Zwangsführung.

In Fig. 4 ist eine Ausführungsform gezeigt, bei der zwischen dem Schwenkhebel 20 und dem Mittelbügel 15 zusätzlich eine in Querrichtung ausgerichtete Schiebeführung 23 vorgesehen ist. Der Anlenkpunkt des Schwenkgelenks 21 kann sich über die Schiebeführung 23 relativ zu dem Mittelbügel 15 bewegen. Die in Fig. 3 durch die Länge des Schwenkhebels 20 gegebene Zwangsführung wird dadurch aufgehoben. Bezogen auf die horizontale Ebene können die Kabel 16 und der Mittelbügel 15 sich frei relativ zueinander bewegen, so dass beide die Position einnehmen können, in der die geringsten Spannungen auftreten. In der vertikalen Richtung hingegen unterliegen die Kabel 16 weiterhin der gewünschten definierten Führung, so dass ein Schlagen der Kabel nach oben oder unten verhindert wird.

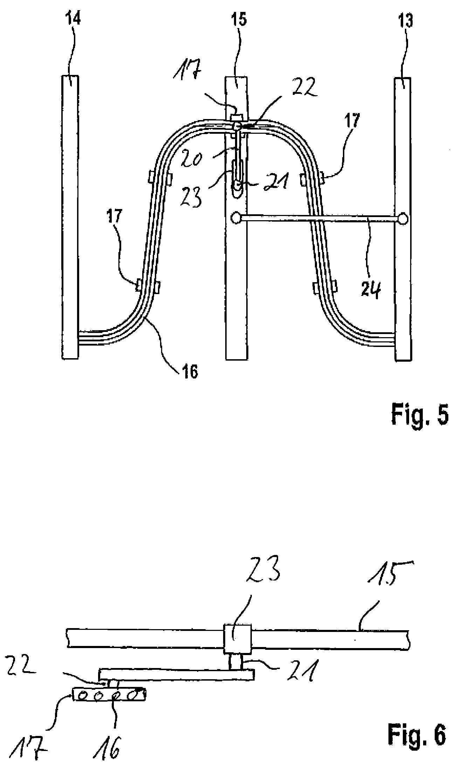

Der Mittelbügel 15 ist bei der Ausführungsform gemäß Fig. 5 über eine starre Lenkstange 24 mit dem Endrahmen 13 verbunden. Sowohl mit dem Endrahmen 13 als auch mit dem Mittelbügel 15 ist die Lenkstange 24 über ein Gelenk verbunden, das Schwenkbewegungen um eine senkrechte Gelenkachse zulässt. Wenn der Gelenkbus also um eine Kurve fährt und in seitlicher Richtung einknickt, kann der Mittelbügel 15 die entsprechende Schwenkbewegung nachvollziehen, so dass er permanent ungefähr eine Mittelposition zwischen dem Endrahmen 13 und dem Endrahmen 14 einnimmt. Fährt der Gelenkbus hingegen über eine Kuppe, so wird die entsprechende Nickbewegung nur zwischen dem Mittelbügel 15 und dem Endrahmen 14 ausgeglichen. Der Abstand zwischen dem Endrahmen 13 und dem Mittelbügel 15 bleibt aufgrund der Lenkstange 24 konstant. Bei Nickbewegungen ist der Mittelbügel 15 also nicht in einer Mittelposition zwischen dem Endrahmen 13 und dem Endrahmen 14. Insbesondere bei dieser Ausführungsform ist es von Vorteil, wenn eine Schiebeführung 23 zwischen dem Schwenkhebel 20 und dem Mittelbügel 15 vorgesehen ist, weil die Relativbewegungen zwischen dem Mittelbügel 15 und den Kabeln 16 stärker sind als bei einer Ausführungsform, bei der der Mittelbügel 15 permanent in einer Mittelposition zwischen dem Endrahmen 13 und dem Endrahmen 14 gehalten wird.

Bei den bisher beschriebenen Ausführungsformen werden die Kabel 16 durch Trageelemente 17 zu einem Strang zusammengehalten. Darüber hinaus sind keine weiteren Maßnahmen zur Stabilisierung der Kabel 16 vorgesehen. Der Weg, den die Kabel 16 im Zwischenraum zwischen dem Vorderwagen 10 und dem Hinterwagen 11 nehmen, bestimmt sich allein aus der Eigenstabilität der Kabel 16. Bei anderen Ausführungsformen (nicht dargestellt) kann eine zusätzliche Kabelführung, beispielsweise in Form einer Blattfeder vorgesehen sein.

## Patentansprüche

1. Mittelbügelsystem für ein zwischen einem Vorderwagen (10) und einem Hinterwagen (11) eines Fahrzeug angeordnetes, einen Durchgang (33) zwischen dem Vorderwagen (10) und dem Hinterwagen (11) bildendes Fahrzeuggelenk, umfassend ein sich zwischen dem Vorderwagen (10) und dem Hinterwagen (11) erstreckendes Kabel (16), wobei der Mittelbügel (15) den Durchgang (33) umschließt und wobei das Kabel (16) oberhalb des Durchgangs (33) angeordnet ist, **gekennzeichnet durch** einen Schwenkhebel (20) zwischen dem Mittelbügel (15) und dem Kabel (16).

2. Mittelbügelsystem nach Anspruch 1, **dadurch gekennzeichnet, dass** der Schwenkhebel (20) eine definierte Vertikalführung für das Kabel (16) bietet.

3. Mittelbügelsystem nach einem der Ansprüche 1 bis 2, **dadurch gekennzeichnet, dass** ein erstes Schwenkgelenk (21) zwischen dem Schwenkhebel (20) und dem Mittelbügel (15) angeordnet ist.

4. Mittelbügelsystem nach einem der Ansprüche 1 bis 3, **dadurch gekennzeichnet, dass** ein zweites Schwenkgelenk (22) zwischen dem Schwenkhebel (20) und dem Kabel (16) angeordnet ist.

5. Mittelbügelsystem nach einem der Ansprüche 1 bis 4, **dadurch gekennzeichnet, dass** der Schwenkbereich des Schwenkhebels (20) die Querrichtung umfasst.

6. Mittelbügelsystem nach einem der Ansprüche 1 bis 5, **gekennzeichnet durch** eine Schiebeführung (23) zwischen dem Schwenkhebel (20) und dem Mittelbügel (15) und/oder zwischen dem Schwenkhebel (20) und dem Kabel (16).

7. Mittelbügelsystem nach einem der Ansprüche 1 bis 6, **dadurch gekennzeichnet, dass** die Schiebeführung (23) in Querrichtung ausgerichtet ist.

8. Mittelbügelsystem nach einem der Ansprüche 1 bis 7, **dadurch gekennzeichnet, dass** der Schwenkhebel (20) längenvariabel ist.

9. Mittelbügelsystem nach einem der Ansprüche 1 bis 8, **dadurch gekennzeichnet, dass** eine sich zwischen dem Vorderwagen (10) und dem Hinterwagen (11) erstreckende Kabelführung vorgesehen ist, an der das Kabel (16) befestigt ist.

10. Mittelbügelsystem nach Anspruch 9, **dadurch gekennzeichnet, dass** die Kabelführung einen Weg fester Länge zwischen dem Vorderwagen (10) und dem Hinterwagen (11) definiert.

11. Mittelbügelsystem nach Anspruch 10, **dadurch gekennzeichnet, dass** die Kabelführung eine Blattfeder umfasst.

12. Mittelbügelsystem nach einem der Ansprüche 1 bis 11, **dadurch gekennzeichnet, dass** eine Lenkstange (24) vorgesehen ist, die an dem Mittelbügel (15) angelenkt ist und eine Drehung des Mittelbügels (15) um eine senkrechte Achse erlaubt, wobei die Lenkstange (24) eine Verbindung zum Vorderwagen (10) oder zum Hinterwagen (11) herstellt.
